# EUROPÄISCHE PATENTANMELDUNG

(11) **EP 0 911 251 A1**
(43) Veröffentlichungstag der Anmeldung: **28.04.1999**
(21) Anmeldenummer: 97118155.7
(22) Anmeldetag: 20.10.1997
(51) Int. Cl.: B62K 27/12, B62B 9/28

(54) **Kinderwagen-Anhänger**

(71) Anmelder: Haeggberg, Christian, 9602 Bazenheid (CH)
(72) Erfinder: Haeggberg, Christian, 9602 Bazenheid (CH)
(74) Vertreter: Hepp, Dieter

(57) **Zusammenfassung**

Der Kinderwagen-Anhänger besitzt eine Plattform (1), an der zwei Räder (2) und eine Kupplungseinrichtung (6, 10, 11, 13) zum Verbinden mit einer Radachse (5) eines Kinderwagens angeordnet sind. Die Kupplungseinrichtung (6, 10, 11, 13) ist an der Plattform (1) höhenverstellbar angebracht. Dadurch kann sich die Plattform (1) unabhängig von der Höhenlage der Radachse (5), mit der die Kupplungseinrichtung (6, 10, 11, 13) verbunden ist, stets etwa parallel zum Fussboden erstrecken, auf welchem der Anhänger steht.

## Beschreibung

Die Erfindung bezieht sich auf einen Kinderwagen-Anhänger mit einer Plattform, an der zwei Räder und eine Kupplungseinrichtung zum Verbinden mit einer Radachse eines Kinderwagens angeordnet sind.

Bekannte Kinderwagen-Anhänger dieser Art weisen verschiedene Nachteile auf, unter anderem den, dass die Plattform beim Gebrauch je nach der Höhenlage der Radachse im Kinderwagen mehr oder weniger stark nach oben oder nach unten geneigt ist.

Die primäre Aufgabe der Erfindung besteht darin, einen Kinderwagen-Anhänger der eingangs angegebenen Art so auszubilden, dass sich die Plattform unabhängig von der Höhenlage einer Radachse, mit der die Kupplungseinrichtung verbunden ist, stets etwa parallel zum Fussboden erstrecken kann, auf welchem der Anhänger steht.

Der erfindungsgemässe Kinderwagen-Anhänger, mit dem die Aufgabe gelöst wird, ist dadurch gekennzeichnet, dass die Kupplungseinrichtung an der Plattform höhenverstellbar angebracht ist.

Vorzugsweise kann eine Lagerhülse für die beiden Räder unmittelbar an der Unterseite der Plattform befestigt sein. Dadurch können die Räder bei einer gegebenen, relativ geringen Höhe der Oberseite der Plattform über dem Fussboden, auf dem der Anhänger steht, einen relativ grossen Durchmesser haben, der das Fahren auf unebenen Fussböden, etwa Kopfsteinpflaster oder Kies, erleichtert. Dasselbe kann erreicht werden, wenn die Räder auf Bolzen gelagert sind, die in in die Plattform eingegossene Muttern geschraubt sind.

An die Plattform können Kotflügel angeformt sein, welche die Räder oberseitig umfassen und gleichzeitig als Sicherung gegen seitliches Abrutschen von der Oberseite der Plattform dienen.

Ausführungsbeispiele der Erfindung werden nachstehend anhand der Zeichnungen erläutert. In diesen zeigen:
Fig. 1 eine schematische Draufsicht auf einen erfindungsgemässen Kinderwagen-Anhänger,
Fig. 2 einen Längsschnitt durch den Kinderwagen-Anhänger von Fig. 1,
Fig. 3 einen Längsschnitt durch einen vorderen Abschnitt einer Plattform des Kinderwagen-Anhängers in einer Variante,
Fig. 4 eine Draufsicht auf einen hinteren Abschnitt der Plattform in einer weiteren Variante,
Fig. 5 in kleinerem Massstab eine Seitenansicht eines Kinderwagen-Anhängers mit einer zusätzlich angebrachten Haltestange,
Fig. 6 eine Seitenansicht eines Kinderwagen-Anhängers mit einer zusätzlich angebrachten Deichsel,
Fig. 7 eine Seitenansicht eines Kinderwagen-Anhängers, bei dem die Räder durch Kufen ersetzt worden sind,
Fig. 8 eine Seitenansicht des Kinderwagen-Anhängers von Fig. 7 mit einer zusätzlichen Lenkkufe und
Fig. 9 eine Seitenansicht eines Kinderwagen-Anhängers mit einer Deichsel mit Haltestange.

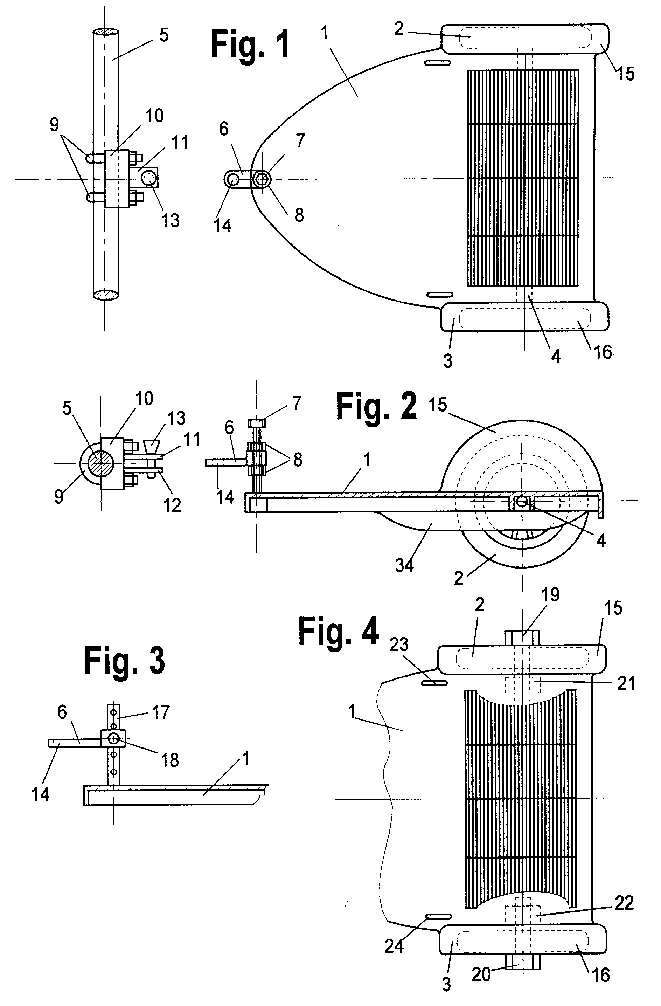

Der in den Fig. 1 und 2 schematisch dargestellte Kinderwagen-Anhänger besitzt eine Plattform 1 aus wetterfestem Kunststoff, an der im Bereich eines hinteren Randes zwei Räder 2, 3 angeordnet sind. Die Achsen der Räder 2, 3 sind in einer Lagerhülse 4 gelagert, die unmittelbar an der Unterseite der Plattform anliegt und an dieser befestigt ist.

Beim vorderen Ende des Kinderwagen-Anhängers ist eine Kupplungseinrichtung zum Verbinden mit einer Radachse 5 eines im übrigen nicht dargestellten Kinderwagens angeordnet. Die Kupplungseinrichtung enthält eine Lasche 6, die an einer auf der Plattform 1 befestigten Gewindestange 7 höhenverstellbar und mit Stellmuttern 8 fixierbar gehalten ist. Weiter enthält die Kupplungseinrichtung einen Halter mit einer an der Radachse 5 mit Bügeln 9 befestigbaren Platte 10, welche zwei abstehende Vorsprünge 11, 12 trägt. Die Vorsprünge 11, 12 enthalten vertikale Bohrungen, durch die ein Kupplungsbolzen 13 gesteckt ist. Der Kopf des Kuplungsbolzens 13 ist vorzugsweise durch eine Zugfeder (nicht dargestellt) mit dem oberen Vorsprung 11 verbunden; der Kupplungsbolzen kann dadurch nicht verloren gehen.

Statt mit den Bügeln 9 könnte die Platte 10 an der Radachse 5 auch mit einer Gegenplatte (nicht dargestellt) festgeklemmt sein.

Die Plattform 1 ist in vom Kinderwagen gelöstem Zustand dargestellt. Für das Ankuppeln an den Kinderwagen wird der Kupplungsbolzen 13 nach oben gezogen, dann die Lasche 6 zwischen die beiden Vorsprünge 11, 12 geschoben und der Kupplungsbolzen 13 wieder gesenkt. Der Kupplungsbolzen 13 tritt dabei durch eine vertikale Bohrung 14 in der Lasche 6. Durch den Kupplungsbolzen 13 sind dann, im gekuppelten Zustand, die Lasche 6 und der Halter 10, 11, 12 um die vertikale Achse des Kupplungsbolzens 13 schwenkbar miteinander verbunden.

Auf die Plattform 1 kann beispielsweise ein Kind stehen, das dann mit dem Kinderwagen-Anhänger transportiert wird. Die Plattform 1 kann aber auch etwa Einkaufskörbe oder Einkaufstaschen aufnehmen. Um ein seitliches Abrutschen von der Plattform 1 zu verhindern, sind daran Kotflügel 15, 16 angeformt, welche die Räder 2, 3 oberseitig umfassen und gleichzeitig als Sicherung gegen seitliches Abrutschen von der Oberseite der Plattform 1 dienen.

In Fig. 3 ist eine Variante dargestellt, in welcher die Gewindestange 7 durch eine mit Querlöchern versehene Stange 17 ersetzt ist. Auf der Stange 17 ist eine die Lasche 6 tragende Hülse vertikal verschiebbar angeordnet und mit einem Steckbolzen 18 in verschiedenen Höhenlagen fixierbar.

In der Variante gemäss Fig. 4 sind die Räder 2 und 3 nicht mit einer Achse in einer Lagerhülse gelagert. Stattdessen sind die Räder 2 und 3 auf Bolzen 19 bzw. 20 gelagert, welche in in die Plattform 1 eingegossene Muttern 21 bzw. 22 geschraubt sind. Die Fig. 4 zeigt auch, dass in der Plattform 1 Oeffnungen 23, 24 vorgesehen sein können, durch die ein Sicherungsgurt (nicht dargestellt) für ein auf der Plattform sitzendes Kind gezogen werden kann.

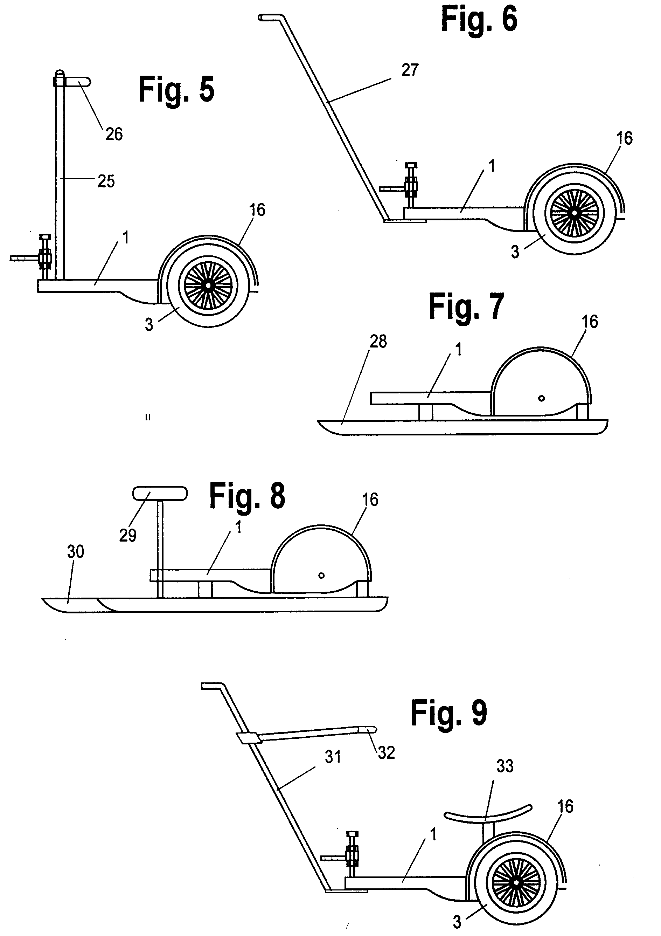

Wenn mit dem Kinderwagen-Anhänger ein Kind transportiert werden soll, kann auf der Plattform 1 wie in Fig. 5 gezeigt eine Stange 25 mit Haltegriffen 26 für das auf der Plattform stehende Kind lösbar befestigt werden. Die Stange 25 kann auch als zweischenkliger Haltebügel geformt sein.

Gemäss Fig. 6 ist an der Plattform 1 eine Deichsel 27 lösbar befestigt. Mit dieser kann die Plattform 1 von Hand gezogen werden, wenn sie nicht mit einem Kinderwagen gekuppelt ist.

Die Räder 2, 3 können von der Plattform 1 lösbar und wie in Fig. 7 oder 8 angedeutet durch Gleitkufen 28 ersetzbar sein. Mit diesen kann der Kinderwagen-Anhänger über Schnee gezogen werden.

In der Variante gemäss Fig. 8 ist an der Plattform 1 eine dritte, mit einer Lenkstange oder einem Lenkrad 29 um eine vertikale Achse schwenkbare Kufe 30 als Lenkkufe lösbar angebracht. Mit dieser kann die Plattform 1, wenn sie nicht mit einem Kinderwagen gekuppelt ist, als Bob-Schlitten verwendet werden.

Die Fig. 9 zeigt ähnlich wie die Fig. 6 eine Plattform 1 mit daran lösbar befestigter Deichsel 31. Diese Deichsel 31 trägt zusätzlich Handgriffe 32 für ein auf der Plattform 1 stehendes Kind. Ferner zeigt die Fig. 9, dass auf der Plattform 1 ein Sattel oder eine Sitzbank 33 für ein Kind lösbar befestigt sein kann.

Um das Auflaufen der Räder 2, 3 auf eine Bordsteinkante o.dgl. zu erleichtern, können an der Unterseite der Plattform 1 vor den Rädern Auflauf-Gleitschienen 34 befestigt sein (Fig. 2).

## Patentansprüche

1. Kinderwagen-Anhänger, mit einer Plattform (1), an der zwei Räder (2, 3) und eine Kupplungseinrichtung (6, 10, 11, 12, 13) zum Verbinden mit einer Radachse (5) eines Kinderwagens angeordnet sind, dadurch gekennzeichnet, dass die Kupplungseinrichtung (6, 10, 11, 12, 13) an der Plattform (1) höhenverstellbar angebracht ist.

2. Kinderwagen-Anhänger nach Anspruch 1, dadurch gekennzeichnet, dass die Kupplungseinrichtung (6, 10, 11, 12, 13) ein an einer Kinderwagen-Radachse (5) befestigbares erstes Kupplungselement (10, 11, 12, 13) und ein an der Plattform (1) höhenverstellbar befestigtes zweites Kupplungselement (6) besitzt.

3. Kinderwagen-Anhänger nach Anspruch 2, dadurch gekennzeichnet, dass die beiden Kupplungselemente (10, 11, 12, 13, 6) bezüglich einander um eine vertikale Achse schwenkbar sind.

4. Kinderwagen-Anhänger nach Anspruch 2 oder 3, dadurch gekennzeichnet, dass das erste Kupplungselement (10, 11, 12, 13) einen Halter (10, 11, 12) und einen in dem Halter verschiebbaren Kupplungsbolzen (13) besitzt und das zweite Kupplungselement (6) eine eine Bohrung (14) zur Aufnahme des Kupplungsbolzens (13) aufweisende Lasche (6) ist, die an einer auf der Plattform (1) befestigten Stange (7; 17) höhenverstellbar gehalten ist.

5. Kinderwagen-Anhänger nach Anspruch 4, dadurch gekennzeichnet, dass die Stange (7) eine Gewindestange ist und die Lasche (6) daran mit Stellmuttern (8) gehalten ist.

6. Kinderwagen-Anhänger nach einem der Ansprüche 1 bis 5, dadurch gekennzeichnet, dass an der Unterseite der Plattform (1) wenigstens eine Lagerhülse (4) für die beiden Räder (2, 3) befestigt ist.

7. Kinderwagen-Anhänger nach einem der Ansprüche 1 bis 5, dadurch gekennzeichnet, dass die Räder (2, 3) auf Bolzen (19, 20) gelagert sind, die in in die Plattform (1) eingegossene Muttern (21, 22) geschraubt sind.

8. Kinderwagen-Anhänger nach einem der Ansprüche 1 bis 7, dadurch gekennzeichnet, dass an die Plattform (1) Kotflügel (15, 16) angeformt sind, welche die Räder (2, 3) oberseitig umfassen und gleichzeitig als Sicherung gegen seitliches Abrutschen von der Oberseite der Plattform (1) ausgebildet sind.

9. Kinderwagen-Anhänger nach einem der Ansprüche 1 bis 8, dadurch gekennzeichnet, dass auf der Plattform (1) eine Stange (25) mit Haltegriffen (26) für ein auf der Plattform stehendes Kind lösbar befestigt ist.

10. Kinderwagen-Anhänger nach einem der Ansprüche 1 bis 9, dadurch gekennzeichnet, dass an der Plattform (1) eine Deichsel (27) zum Ziehen des Anhängers von Hand lösbar befestigt ist.

11. Kinderwagen-Anhänger nach einem der Ansprüche 1 bis 10, dadurch gekennzeichnet, dass auf der Plattform (1) ein Sattel oder eine Sitzbank (33) lösbar befestigt ist.

12. Kinderwagen-Anhänger nach einem der Ansprüche 1 bis 11, dadurch gekennzeichnet, dass die Räder (2, 3) an der Plattform (1) lösbar und durch Gleitkufen (28) ersetzbar angebracht sind.

13. Kinderwagen-Anhänger nach Anspruch 12, dadurch gekennzeichnet, dass eine dritte, schwenkbare Gleitkufe (30) als Lenkkufe an der Plattform (1) lösbar angebracht ist.

14. Kinderwagen-Anhänger nach einem der Ansprüche 1 bis 13, dadurch gekennzeichnet, dass an der Unterseite der Plattform (1) vor den Rädern (2, 3) Auflauf-Gleitschienen (34) angeordnet sind, die das Auflaufen der Räder (2, 3) auf eine Bordsteinkante erleichtern.
